# EUROPÄISCHE PATENTSCHRIFT

(11) **EP 2 811 238 B1**
(45) Veröffentlichungstag und Bekanntmachung des Hinweises auf die Patenterteilung: **06.09.2017**
(21) Anmeldenummer: 14169936.3
(22) Anmeldetag: 27.05.2014
(51) Int. Cl.: F24J 2/46, F16L 11/118, F24J 2/24, F16L 25/00

(54) **Verteilerrohr aus Kunststoff-Wellrohr als Flüssigkeitsleitung für einen Solarkollektor sowie Verteilerrohrsystem**
Distribution tube made of plastic corrugated tube as a fluid flow line for a solar collector as well as system of distribution tubes
Tuyau distributeur en tube plastique ondulé comme conduite de liquide pour un collecteur solaire et aussi système de tuyaux distributeurs

(30) Priorität: 28.05.2013 DE 102013105494
(43) Veröffentlichungstag der Anmeldung: 10.12.2014
(73) Patentinhaber: Roos Freizeitanlagen GmbH, 63674 Altenstadt (DE)
(72) Erfinder: Roos, Franz, 63674 Altenstadt (DE)
(74) Vertreter: Staudt, Armin Walter

(56) Entgegenhaltungen:
- EP-A2- 2 020 576
- EP-B1- 1 295 062
- WO-A1-2011/073047
- DE-A1- 10 250 305
- DE-A1-102008 022 124
- DE-A1-102008 058 355
- DE-B3-102008 037 740
- GB-A- 1 421 530
- JP-U- H02 122 513
- US-A- 3 501 171

## Beschreibung

### Technischer Hintergrund

Die vorliegende Erfindung betrifft ein Verteilerrohr aus Kunststoff-Wellrohr als Flüssigkeitsleitung für einen Solarkollektor, mit einer von Rohr-Innenseite und Rohr-Außenseite begrenzten Rohr-Wandung mit Wellprofil und rundem Querschnitt, bei dem sich entlang einer Rohr-Längsachse umfänglich verlaufende Wellenberge und Wellentäler abwechseln, wobei entlang einer ersten Längsseite der Rohr-Wandung und jeweils als integraler Bestandteil derselben eine Vielzahl von Rohranschlussstutzen und diesen gegenüberliegend auf einer zweiten Längsseite eine Vielzahl von Sicken zur Formstabilisierung verteilt sind.

Außerdem betrifft die Erfindung ein Verteilerrohrsystem, umfassend ein erstes und ein zweites Verteilerrohr sowie einen Dichtring zur Herstellung einer dichten Verbindung zwischen dem ersten und dem zweiten Verteilerrohr.

Solarkollektoren werden zur Erwärmung des Wassers von Schwimmbädern, fest installierter oder frei aufstellbarer Schwimmbecken, Kinderpools im Innen-oder Außenbereich, Gartenduschen und dergleichen eingesetzt. Sie liegen in der Regel als mattenförmige Parallel-Anordnung von Kollektorrohren vor, die sich zwischen einem gemeinsamen Verteilerrohr und einem gemeinsamen Sammelrohr erstrecken. Über das Verteilerrohr wird das zu erwärmende Wasser den Kollektorrohren zugeführt und aus dem Sammelrohr wieder abgeleitet. In jüngster Zeit sind Verteilerrohre und Sammelrohre bekannt geworden, die aus Kunststoff-Wellrohr gefertigt sind. Die vorliegende Erfindung bezieht sich auf eine Weiterbildung dieser Verteiler- und Sammelrohre. Der Einfachheit halber werden derartige Verteilerrohre und Sammelrohre hier und im Folgenden auch unter dem Begriff "Verteilerrohr" zusammengefasst.

### Stand der Technik

Ein Verteilerrohr für einen Solarkollektor der eingangs genannten Gattung sind aus der DE 10 2008 058 355 A1 sowie aus der DE 10 2007 036 749 A1 (beziehungsweise der dazu äquivalenten EP 2 020 576 A2) bekannt. Das Verteilerrohr und das Sammelrohr sind hier als Wellrohr mit einem Wellprofil und rundem Querschnitt ausgebildet, bei dem sich in üblicher Weise Wellenberge und Wellentäler in axialer Richtung abwechselt. An einer Längsseite der Rohr-Wandung sind Rohranschlussstutzen für den Anschluss der Kollektorrohre vorgesehen, denen auf der gegenüberliegenden Längsseite jeweils eine so genannte Sicke etwa gleicher Größe gegenüberliegt. Die Sicken dienen zum Ausgleich mechanischer Spannungen und tragen somit zur Formstabilisierung und Steifigkeit des Wellrohres bei. Sicken und Rohranschlussstutzen sind integraler Bestandteil der Außenwandung des Verteilerrohres und werden im gleichen Arbeitsgang mittels eines kontinuierlichen Extrusionsblasverfahrens ausgeformt.

Neben Materialersparnis ist ihre gute Frostbeständigkeit ein großer Vorteil von Verteilerrohren mit Wellrohrprofil, die auf die elastische Verformbarkeit und Biegsamkeit zurückzuführen ist. Sie können deswegen der Ausdehnung von Eis leicht nachgeben.

Außerdem zeigt eine unter Einsatz flexibler Verteilerrohre aufgebaute flächige Absorbermatte auch eine gewisse Biegsamkeit in Richtung der Matten-Normalen, so dass sie sich Unebenheiten der Unterlage leicht anpassen kann.

Andererseits ist es in der Regel erwünscht, dass eine einmal verlegte Absorbermatte ihre Form nicht wesentlich verändert. Zur Gestaltbeständigkeit der Absorbermatte können Verteilerrohre mit Wellprofil wegen ihrer Flexibilität jedoch weniger beitragen als traditionelle, biegesteife Glattrohre. Insbesondere kann es zu Verwindung und Längung in Richtung der Wellrohr-Längsachse kommen.

Um dies auszugleichen, sind bei der Absorbermatte gemäß DE 10 2007 036 749 A1 steife Arretier- oder Stabilisierungsprofile vorgesehen, die parallel zu den Verteilerrohren verlaufen und die sich über die gesamte Breite der Absorbermatte erstrecken. Die Profile weisen nach oben offene, halbkreisförmige Ausnehmungen auf, in welche die Kollektorrohre eingeklipst werden.

Die biegesteifen Stabilisierungsprofile können nicht auf einer Rolle aufgewickelt und müssen daher in der Regel vor Ort aus relativ kurzen ProfilTeilstücken mit Längen von weniger als 1 m zusammengefügt werden. Diese Montagearbeiten sind insbesondere bei großflächigen Absorbermatten aufwändig.

Zur Formstabilisierung von Wellrohren kann die Wellrohnivandung mit Eindellungen oder Ausbuchtungen versehen werden. Zu diesem Zweck sind bei einem Kunststoff-Wellrohr gemäß der US 3,578,777 A von der Innenseite aus Eindellungen der Wandung vorgenommen. Diese führen auf der Wellrohr-Außenseite zu Ausbuchtungen, die sich zwischen den Flanken der Wellenberge erstrecken und diese stegartig miteinander verbinden. Die hohlen, stegartigen Ausbuchtungen sind in Umfangsrichtung versetzt oder sie verlaufen in mehreren geraden Reihen auf verschiedenen Umfangswinkeln entlang der Wellrohr-Längsachse.

Eine ähnliche Flüssigkeitsleitung mit gewelltem Abschnitt ist auch aus der EP 2 154 404 A2 bekannt. Um Längenänderungen zu vermeiden, sind über eine Teillänge die Wellenberge mittels Verbindungsstegen (als "Zuganker" bezeichnet) miteinander verbunden. Der Zuganker füllt das Wellental zwischen benachbarten Wellenbergen vollständig aus. Es können auch zwei Zuganker an sich gegenüberliegenden Längsseiten vorgesehen sein. Der Zuganker bildet auch hier einen Hohlraum aus, der mit dem Innenraum der Flüssigkeitsleitung 1 in Verbindung steht. Demnach weist der Innenraum eine radiale Ausbuchtung dort auf, wo der Zuganker und ein Wellental zusammentreffen."

Die WO 2011/073047 A1 lehrt Wellrohre aus thermoplastischem Kunststoff, wie sie beispielsweise in Frischluftanlagen von Kraftfahrzeugen eingesetzt werden. Um die Längselastizität des Wellrohrs in Längsrichtung zu reduzieren und gleichzeitig die Biegeelastizität und eine dreidimensionale Beweglichkeit aufrechtzuerhalten, wird vorgeschlagen, die Wellrohr-Wandung mit mindestens einer Längsfalte und/oder mit mindestens einem Längssteg zu versehen. Der Längssteg kann gleichzeitig an der Innenseite und an der Außenseite der Wellrohr-Wandung ausgebildet sein. Er wirkt gegebenenfalls im Wellrohr wie ein längsorientierter Zuganker und er verbindet mehrere Wellenberge miteinander, vorzugsweise jedoch nicht alle Ringfalten.

Zu Gunsten von Flexibilität und Gewichtsersparnis haben Wellrohre häufig eine relativ geringe Wandstärke und sind deswegen wenig stabil gegen von außen radial einwirkenden Druck. Das Wellprofil erschwert daher die Herstellung einer Pressdichtung zur Verbindung mit endseitigen Rohranschlüssen, wie etwa bei Einsatz von Schlauchschellen.

Die dauerhafte Dichtheit ist ein grundlegendes Erfordernis eines jeden Solar-kollektors. Dabei stellen nicht nur Frost, sondern auch andere Umgebungs- und Betriebsparameter hohe Anforderungen. So kommt es beispielsweise im täglichen Einsatz bei und ohne Sonneneinstrahlung zu hohen Temperaturschwankungen, die 70 °C oder mehr betragen können. Typische Betriebsdrücke der zu erwärmenden Flüssigkeit liegen um 3 bar.

Um die Dichtheit auch bei Wellrohren zu gewährleisten, sind gemäß der US 3,578,777 A die Wellrohr-Enden als Glattrohrstück mit glattem Zylindermantel ausgeführt. Sie bieten damit eine gegen radialen Druck stabile und geeignete Dichtfläche. Glatte Anschlussenden bei einer Fluidleitung mit Wellrohrabschnitt sind auch aus der EP 1 295 062 B1 bekannt. Die Flexibilität des Wellrohrabschnitts wird durch eingefasste Verbindungsstege eingestellt, deren Höhe niedriger ist als die Höhe der Wellenberge. Dabei können sich zwei Verbindungsstege an gegenüberliegenden Längsseiten des Wellrohrabschnitts erstrecken.

Die glatten Wellrohrenden legen jedoch die Wellrohrlänge fest und erlauben kein Zurechtschneiden auf ein davon abweichendes Vorgabemaß.

Dieses ermöglicht hingegen das Wellrohr gemäß der DE 10 2007 036 749 A1. Für das Herstellen eines wasserdichten Rohranschlusses wird eine Muffe vorgeschlagen, die die Verteilerrohr-Mantelfläche von außen umgreift und dabei mit ihrer Innenseite an einem Dichtring anliegt, der wiederum in ein Wellental des Wellprofils eingelegt ist. Diese Technik ist jedoch nicht übertragbar auf ein Wellrohr, bei dem das Wellental von einer oder mehreren Ausbuchtungen unterbrochen ist.

Diesen Nachteil hat auch das flexible Verbindungsstück in Wellrohrform, wie es in der DE 102 50 305 A1 beschrieben ist. Das Verbindungsstück dient zum Anschluss von Komponenten einer Solaranlage, zum Beispiel zur Verbindung von benachbarten Solarkollektoren Hierfür ist ein Schraubanschluss vorgesehen, bei dem eine Überwurfmutter einen Sprengring und eine daran anliegende Flachdichtung übergreift. Sprengring und Flachdichtring sind in einem gemeinsamen aufgeschnittenen Wellental eingelegt und werden mittels der Überwurfmutter und einem dazu passenden Gegenstück am anderen Rohrende gegen einen Anschlag gepresst.

Die Dichtung erfolgt dabei durch axialen Druck auf die Flachseite der Flachdichtung. Um die Dichtheit zu gewährleisten, müssen die beiderseitigen Dichtflächen eben und glatt sein. Dies ist durch einfaches Abschneiden des Wellrohres nicht reproduzierbar zu erreichen. Zudem gibt die flexible Flachdichtung je nach Pressdruck mehr oder weniger nach, so dass die Länge der Verbindungseinheit variieren kann. Dies ist dann problematisch, wenn eine Vielzahl von Rohrstücken mittels derartiger Verbindungseinheiten hintereinander zu verbinden ist und ein exaktes Längen-Endmaß erforderlich ist, wie dies bei Verteiler- und Sammelrohren großflächiger Solarkollektoren der Fall ist.

### Technische Aufgabe

Der vorliegenden Erfindung liegt die Aufgabe zugrunde, ein Verteilerrohr beziehungsweise ein Sammelrohr mit Wellprofil als Flüssigkeitsleitung für einen Solarkollektor für einen Solarkollektor bereit zu stellen, das dem Solarkollektor Formstabilität verleiht, und das zur Herstellung einer dichten Verbindung zwischen dem Wellrohr und endseitigen Anschlüssen mit engem Raster auf ein vorgegebenes Maß abgelängt werden kann.

Außerdem liegt der Erfindung die Aufgabe zugrunde, ein Verteilerrohrsystem anzugeben, das die Herstellung einer dichten Verbindung zwischen zwei Verteilerrohren ermöglicht.

### Allgemeine Beschreibung der Erfindung

Hinsichtlich des Verteilerrohres wird diese Aufgabe ausgehend von einem Verteilerrohr der eingangs genannten Gattung erfindungsgemäß dadurch gelöst, dass sich entlang der ersten Längsseite und entlang der zweiten Längsseite jeweils ein Längssteg erstreckt, über den benachbarte Wellenberge so miteinander verbunden sind, dass sowohl an der Rohr-Außenseite als auch an der Rohr-Innenseite die Wellentäler mindestens teilweise mit Stegmasse aufgefüllt sind, wobei der eine Längssteg durchgängig zwischen den Rohranschlussstutzen ausgebildet und durch die Rohranschlussstutzen unterbrochen ist, und der andere Längssteg durchgängig zwischen den Sicken ausgebildet und durch die Sicken unterbrochen ist.

Beim erfindungsgemäßen Verteilerrohr/Sammelrohr sind mindestens zwei Längsstege vorgesehen. Diese verlaufen entlang der sich gegenüberliegenden Rohr-Längsseiten, an denen auch die Rohranschlussstutzen und die Sicken als integrale Bestandteile des Verteilerrohres angeordnet sind. Die Längsstege sind durch die Rohranschlussstutzen und die Sicken unterbrochen.

Im Gegensatz zu den bekannten Flüssigkeitsleitungen in Form verstärkter Kunststoff-Wellrohre korrespondieren die Stegabschnitte im Wellental der Rohr-Außenseite jedoch nicht mit Einbuchtungen auf der Innenseite, sondern die Längsstege bestehen zwar aus demselben Werkstoff wie das Wellrohr-Profil, jedoch aus einer eigenen, zusätzlich zum Wellrohr-Profil erzeugten Stegmasse.

Diese Stegmasse ist so verteilt, dass die Wellentäler des Verteilerrohres an Außenseite und Innenseite mindestens teilweise - und an der Rohr-Außenseite vorzugsweise vollständig - mit Stegmasse aufgefüllt sind. Die Längsstege sind im Idealfall vollkommen massiv und zwischen den Rohranschlussstutzen beziehungsweise zwischen den Sicken durchgängig ausgebildet. Sie erfüllen - insbesondere wegen ihrer massiven Ausbildung - folgende Funktionen:
(a) Sie wirken einer Längung des Verteilerrohres im Betrieb entgegen.
(b) Sie tragen erheblich zur Verwindungssteifigkeit des Verteilerrohres bei.
(c) Sie definieren radiale Umfangspositionen um den Außenmantel des Verteilerrohres und können damit als radialer Anschlag für etwaige stirnseitige Rohranschlüsse oder Verlängerungsstücke dienen. Dies wird weiter unten noch näher erläutert.
(d) Da sie aus eigener, zusätzlicher "Stegmasse" bestehen, und nicht mit einem Hohlraum auf der gegenüberliegenden Wandungsseite korrespondieren, erlauben sie das vollständige Entfernen des Stegs bis ins ursprüngliche Wellental der Verteilerrohr-Außenseite, ohne dass dadurch in der Rohrwandung ein Loch entsteht. Dies ermöglicht, bei Bedarf einen umlaufenden Dichtring zur Herstellung eines dichten stirnseitigen Rohranschlusses einzulegen und das Wellrohr dabei in engem Raster, an nahezu jeder beliebigen Stelle abzuschneiden. Auch dies wird weiter unten noch näher erläutert.

Insbesondere im Hinblick auf die erwähnte Funktion als radialer Anschlag zu dienen, hat es sich als günstig erwiesen, wenn der Längssteg an der Rohr-Außenseite durch ebene, gerade, seitliche Flanken und durch eine ebene Längssteg-Oberseite begrenzt ist.

Die beiderseitigen seitlichen Flanken des Längsstegs erstrecken sich in Richtung der Verteilerrohr-Längsachse. Sie bilden eine ebene, glatte und definierte Anlagefläche für etwaige Anschlussteile. Die beiden Flankenebenen können dabei einen Winkel ungleich null Grad (beispielsweise +/-10 Grad) einschließen, also geneigt zueinander verlaufen. Im einfachsten und bevorzugten Fall verlaufen die beiden Flankenebenen jedoch parallel zueinander.

Häufig sind bei Wellrohren die Wellenberge abgerundet. Es hat sich aber als besonders günstig erwiesen, wenn auch die Wellenberge des Wellprofils von geraden seitlichen Flanken und von einer ebenen Oberseite begrenzt sind, wobei die Oberseite der Wellenberge im Wesentlichen bündig mit der Längssteg-Oberseite abschließt.

Die Stege füllen demnach das Wellental vollständig aus sie und sie stehen andererseits nicht oder allenfalls vernachlässigbar wenig über die Wellenberge über. Dadurch erfüllen sie die oben genannten Funktionen hinsichtlich Formstabilisierung und Bereitstellen eines radialen, definierten Anschlags in optimaler Weise. Die Flanken der Wellenberge sind gerade und verlaufen parallel oder geringfügig geneigt zueinander, so dass die Wellenberge im Querschnitt Rechteck- oder Trapezform zeigen. Dieses Wellenprofil begünstigt die maßgenaue Fertigung, Einpassung und Abdichtung des Verteilerrohres. So bilden beispielsweise die Flanken benachbarter Wellenberge und der sie verbindende Längssteg zusammen einen dreiseitigen, rechtwinkligen Rahmen, der zur definierten Aufnahme und Fixierung von Montageteilen geeignet ist.

Infolge ihrer massiven Ausbildung genügt im Bereich der Verteilerrohr-Außenseite eine geringe Stegbreite von weniger als 2 mm, um die gewünschte Formstabilität zu erreichen.

Es hat sich als günstig erwiesen, wenn die Stegmasse zur Auffüllung der Wellentäler an der Rohr-Innenseite einen im Wesentlichen halbrunden Querschnitt aufweist.

Die Stegmasse füllt dabei die Wellentäler an der Rohr-Innenseite mindestens teilweise, bevorzugt vollständig, aus. Der halbrunde Querschnitt wird durch eine konvexe Außenwölbung der Stegmasse innerhalb oder außerhalb der Wellentäler erzeugt.

Im Vergleich zu polygonalen Stegform oder einem Stegmasse mit konkaver Wölbung behindert die halbrunde Ausführung die Flüssigkeitsströmung innerhalb des Verteilerrohres wenig, insbesondere die für den Wärmetransport wichtige Verwirbelung am und um den Innenmantel des Wellrohres. Außerdem werden tote Ecken und Winkel vermieden, die das Ausspülen und Leeren des Wellrohres erschweren und die zu Ablagerungen aus der im Wellrohr geleiteten Flüssigkeit und zu Verkeimungen führen können.

Zum Herstellung einer dichten Verbindung zu einem anderen Bauteil, beispielsweise einer Verteilerrohr-Verlängerung oder eines Bauteils zur Zu- oder Ableitung der Flüssigkeit ist bei dem Verteilerrohrsystem gemäß der Erfindung vorgesehen, dass eines der stirnseitigen Enden des ersten Verteilerrohres mit einer Muffe versehen ist, die eine Bohrung aufweist, die sich in Richtung der Rohr-Längsachse von außen nach innen verjüngt und in einem hinteren Längenabschnitt einen - bevorzugt konstanten - Innendurchmesser aufweist, der kleiner ist als ein vorgegebener Durchmesser eines in ein Wellental eingelegten Dichtrings.

Zum Anschluss anderer Bauteile sind ein Ende oder beide Enden des Verteilerrohres mit einer Muffe versehen. Die Verbindung zwischen Verteilerrohr und Muffe ist dicht und wird beispielsweise durch Anspritzen, Verschweißen oder Verkleben erzeugt. Über einen vorderen Längenabschnitt verjüngt sich ihr Bohrungs-Innendurchmesser von außen nach innen und geht in einen hinteren Längenabschnitt mit konstantem Innendurchmesser über. Bei der Herstellung einer dichten Verbindung mit einem anderen Bauteil, das an seiner Zylindermantelfläche einen Dichtring aufweist, erleichtert der konische, vordere Längenabschnitt das Einführen des Dichtrings, wohingegen er im hinteren Längenabschnitt zusammengepresst wird und dadurch die Abdichtung erfolgt. Zu diesem Zweck ist der Durchmesser der Muffenbohrung geringfügig kleiner als der Außendurchmesser des Dichtrings, wenn dieser in das Wellental eingelegt ist.

Das Verteilerrohr wird üblicherweise in Stücken vorgegebener Länge bereitgestellt. Vor Ort wird es durch Kürzen oder Ansetzen von Verlängerungsstücken auf die gewünschte Länge gebracht. Zur Verlängerung genügt es, wenn an einem Rohrende eine Muffe vorgesehen ist.

Vorzugsweise weist die Muffe zu diesem Zweck ein Außengewinde auf, wobei zur Herstellung einer dichten Verbindung das der Muffe zugewandte stirnseitige Ende des zweiten Verteilerrohrs, bei dem der Dichtring in ein geöffnetes Wellental des Wellprofils eingelegt ist, mit einer zweiteiligen Überwurfmutter versehen ist, die ein Innengewinde aufweist, das mit dem Außengewinde der Muffe korrespondiert.

Der Dichtring gibt den oben erwähnten Dichtungs-Durchmesser vor. Er ist in ein geöffnetes Wellental des Wellprofils eingelegt. Zur Öffnung des Wellentals werden die beiderseitigen Stege entfernt, beispielsweise durch Abschneiden.

Durch Aufdrehen der Überwurfmutter auf das Außengewinde der Muffe werden die beiden Verteilerrohre gegeneinander gezogen, bis die konische Dichtfläche der Muffe dichtend gegen den Dichtungsring anliegt. Die Dichtung erfolgt somit dadurch, dass Druck in radialer Richtung auf den Dichtungsring ausgeübt wird. Der elastisch verformbare Dichtungsring wird dadurch von außen in das Wellental gepresst und füllt es aus, so dass geeignete ebene und glatte Dichtflächen sowohl an den Flanken als auch am Boden des Wellentals vorhanden sind, was eine verlässliche Abdichtung gewährleistet. Da der Pressdruck auf den Dichtungsring in radialer Richtung wirkt - und nicht in axialer Richtung - erfolgt die Verformung in das Wellentalhinein, was zur Dichtheit beiträgt aber nicht zu einer Weitung des Wellentals in axialer Richtung führt. Somit verursacht der Anschluss keine unreproduzierbare Längenänderung. Dazu trägt auch eine Ausführungsform des Verteilerrohres bei, bei der zur Lagerung der Überwurfmutter ein Mutterträger vorgesehen ist, wie dies im Folgenden noch näher erläutert wird.

Zur drehbaren Lagerung der Überwurfmutter am zweiten Verteilerrohr hat es sich als günstig erwiesen, wenn die Überwurfmutter an ihrem hinteren, dem zweiten Verteilerrohr zugewandten Ende einen nach innen ragenden umlaufenden Kragen aufweist, der drehbar an einem Mutterträger gelagert ist, bevorzugt in einer am Außenumfang des Mutterträgers umlaufenden Nut des Mutterträgers, wobei der Mutterträger als zweiteiliger Ring ausgeführt ist, der mit seiner Innenseite in einem Wellental des Wellprofils einliegt.

Der Mutterträger liegt in einem Wellental des Wellprofils ein. Er ist zweiteilig ausgeführt, so dass er im Bereich der beiderseitigen Stege, die das Wellental queren, unterbrochen ist oder eine Ausnehmung an diesen Stellen aufweist. Die Stege dienen in dem Fall als Anschlag für die betreffenden Ausnehmungen/Unterbrechungen und als Orientierungshilfe beim Einlegen des Mutterträgers in das Wellental. Zum Einlegen in das Wellental verfügt der Mutterträger über eine zum Querschnittsprofil des Wellentals passende Innenseite.

Dadurch, dass die Stege in dem Wellental erhalten bleiben, in das der Mutterträger eingelegt wird, wird eine Unterbrechung des Kraftlinienflusses in Richtung auf das Ende des Verteilerrohres vermieden. Eine Unterbrechung würde zu einer Schwachstelle und damit im Lauf der Zeit zu einer Formänderung führen, beispielsweise durch Abknicken oder Längung (Ziehharmonika-Effekt).

Die Außenseite des Mutterträgers ist vorteilhafterweise mit einer umlaufenden Nut versehen. Die Überwurfmutter am Mutterträger - und bevorzugt ist in der Nut des Mutterträgers drehbar gelagert - und nicht unmittelbar am Wellprofil. Dies hat mehrere Vorteile. Denn Wellrohre sind im Vergleich zu Glattrohren in der Regel dünnwandiger, damit sie die gewünschte Flexibilität behalten. Durch Vorsehen des Mutterträgers ergeben sich geringer Flächenlasten auf die Flanken des Wellentals. Dadurch, dass sich die Überwurfmutter auf dem Mutterträger, vorzugsweise innerhalb der Nut des Mutterträgers - dreht, wird Abrieb am stabilen Mutterträger und an der Überwurfmutter erzeugt, jedoch nicht am Wellprofil des Verteilerrohres.

Um die Montage zu vereinfachen sind die beiden Teile von Überwurfmutter und Mutterträger vorteilhafterweise gelenkig miteinander verbunden.

Im Hinblick auf eine Verlängerung des Verteilerrohres mit reproduzierbarer und definierter Lage und Orientierung der beiden zu verbindenden Rohrstücke zueinander hat es sich als vorteilhaft erwiesen, wenn die Muffe in einem hinteren Bereich einen umlaufenden Absatz mit einer in Richtung der Verteilerrohr-Längsachse weisenden Auflagefläche aufweist. In einer bevorzugten Weiterbildung hat die Auflagefläche an zwei sich radial gegenüberliegenden Bereichen jeweils eine Aussparung.

Die sich gegenüberliegenden Aussparungen der Auflagefläche der Muffe des einen Verteilerrohres korrespondieren mit den beiden Stegen, die beim Abschneiden an der Stirnseite des anderen Verteilerrohres verbleiben. Bei der Herstellung des Anschlusses kommt die Stirnseite des einen Verteilerrohres zur Anlage auf der Muffen-Auflagefläche. Dadurch wird zum einen eine exakte und reproduzierbare Länge der Verbindungseinheit aus Muffe und Überwurfmutter vorgegeben und zum anderen wird eine axiale Weitung des Wellentales mit darin eingelegtem Dichtring und damit ein Nachlassen der Dichtwirkung verhindert. Ohne diese Maßnahme könnte es durch axiale Kraftkomponenten, die aus den auf den Dichtring und somit auf die Wellentalflanken einwirkenden radialen Presskräfte resultieren, eine axiale Wellental-Weitung erfolgen. Durch gegenseitiges Verdrehen rasten die Stege des einen Verteilerrohres in die Aussparungen der Muffen-Auflagefläche ein. Durch diesen Formschluss wird eine definierte und stabile Lage der beiden zu verbindenden Verteilerrohre zueinander gewährleistet.

Die Außenseite des Mutterträgers ist vorzugsweise mit einer umlaufenden Nut versehen, in die die Überwurfmutter mit ihrem nach innen ragenden Kragen eingreift. Zur Herstellung des Anschlusses wäre an und für sich nur die vordere Flanke der Nut erforderlich, an der der Kragen beim Anziehen der Schraubverbindung anliegt. Das Öffnen der Verbindung wird vereinfacht, indem sich der Kragen an die hintere Flanke der Nut anpresst.

Oben wurde die Herstellung einer dichten Verbindung zwischen dem Verteilerrohr und einem zweiten Verteilerrohr zwecks Verlängerung beschrieben. Auf ähnliche Art und Weise wird anstelle des zweiten Verteilerrohres ein anderer Anschluss oder ein Blindstopfen mit dem Verteilerrohr verbunden.

### Ausführungsbeispiel

Nachfolgend wird die Erfindung anhand von Ausführungsbeispielen und einer Zeichnung näher erläutert. In schematischer Darstellung zeigt im Einzelnen:
- **Figur 1**: eine Ausführungsform eines Verteilerrohres in einer Seitenansicht mit Rohranschlüssen,
- **Figur 2**: einen radialen Schnitt durch das Verteilerrohr gemäß Figur 1 entlang der Mittellinie A-A eines Rohranschlusses,
- **Figur 3**: einen radialen Schnitt durch das Verteilerrohr gemäß Figur 1 durch ein Wellental der Außenseite des Wellprofils entlang er Linie B-B,
- **Figur 4**: einen radialen Schnitt durch das Verteilerrohr gemäß Figur 1 durch einen Wellenberg der Außenseite des Wellprofils entlang er Linie C-C,
- **Figur 5**: eine Draufsicht auf die Unterseite des Verteilerrohres gemäß Figur 1 im Bereich einer Sicke, und
- **Figur 6**: eine Darstellung zur Erläuterung der Verbindung des Verteilerohres gemäß Figur 1 mit einem weiteren Verteilerrohr.

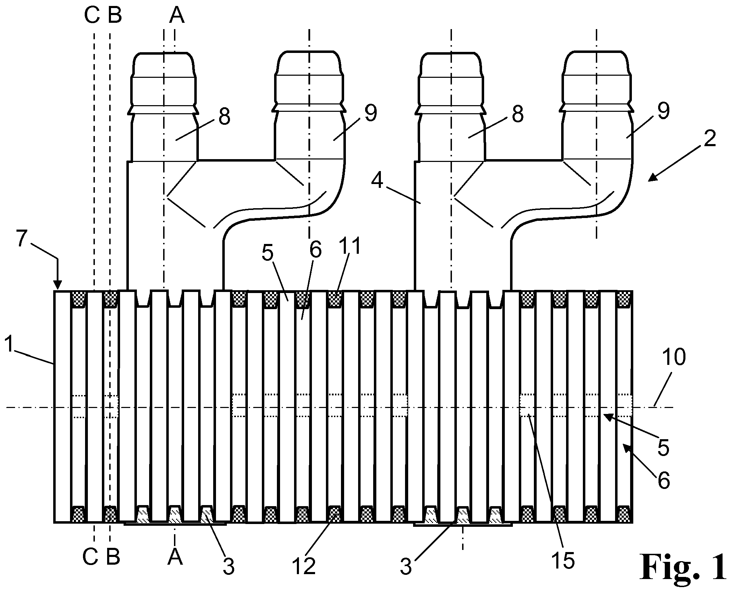

**Figur 1** zeigt schematisch einen Ausschnitt eines Verteilerrohres 1 für einen Absorber zum Erwärmen des Wassers eines Swimmingpools. Das Verteilerrohr 1 ist als Wellrohr ausgebildet. Auf einer Seite der Verteilerrohr-Wandung 7 sind in einem regelmäßigen Abstand von 70 mm entlang der Verteilerrohr-Längsachse 10 Rohranschlüsse 2, und auf der gegenüberliegenden Längsseite der Verteilerrohr-Wandung 7 und jedem Rohranschluss 2 jeweils genau gegenüberliegend ist eine so genannte Sicke 3 vorgesehen. Die Sicke 3 trägt zur Spannungskompensation und zur Versteifung des Verteilerrohres 1 bei. Sie ist als ovale Erhöhung mit etwa den radialen Außenabmessungen des Rohranschlusses 2 ausgeführt.

Sicke 3 und Rohranschluss 2 werden in einem diskontinuierlichen Blasformverfahren zusammen mit dem Verteilerrohr 1 in Stücklängen von 1 m aus Polypropylen ausgeformt und bilden einen integralen Bestandteil desselben.

Bei dem Wellprofil wechseln sich entlang der Rohr-Längsachse 10 umfänglich verlaufende Wellenberge 5 und Wellentäler 6 ab. Der Mittenabstand der Wellenberge liegt bei 7,5 mm. Die Wellenberge 5 haben eine flache Oberseite und ihre beiderseitigen flachen Flanken verlaufen in einem kleinen Winkel zur Oberseite, so dass sich Wellentäler mit trapezförmigem Querschnitt ergeben. Entlang der einen Rohr-Längsseite und mittig zu den Sockeln der Rohranschlüsse 2 erstreckt sich ein massiver durchgehender Steg 11. Entlang der gegenüberliegenden Rohr-Längsseite und mittig zu den Sicken 3 erstreckt sich ein zweiter, ebenfalls massiver durchgehender Steg 12.

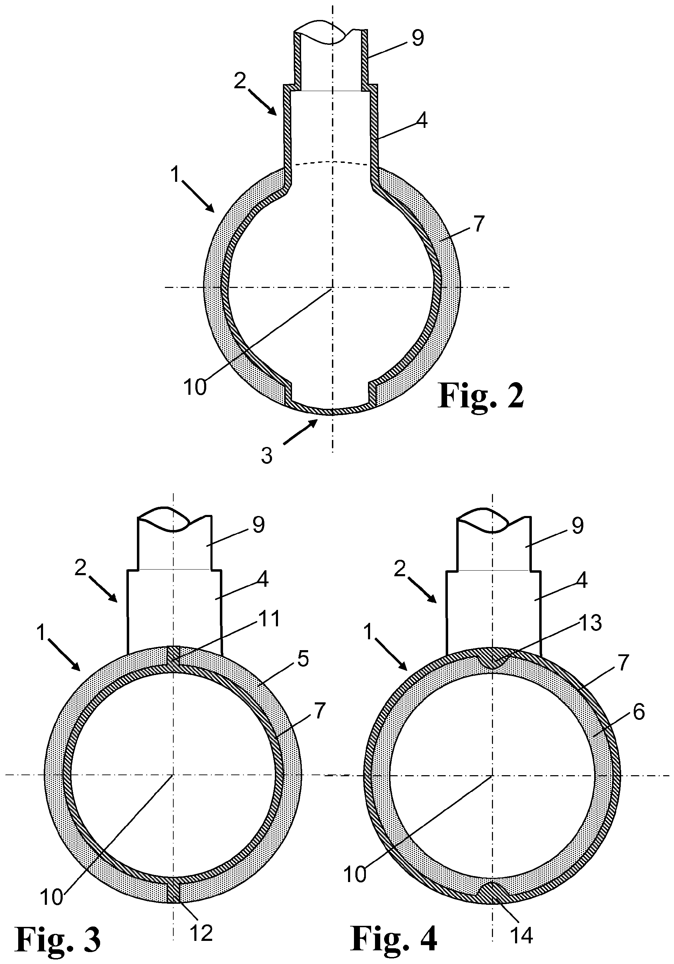

Die Stege 11 und 12 sind sowohl im Wellprofil der Außenseite als auch der Innenseite (siehe Figur 3: Stege 13 und 14) vorgesehen, jeweils unterbrochen durch die Rohranschlüsse 2 und Sicken 3. Auf der Außenseite haben die Stege 11, 12 jeweils gerade, parallel zueinander verlaufende seitliche Flanken und eine ebene Längssteg-Oberseite, die nahezu bündig mit der Oberseite der Wellenberge 5 abschließt. Das bedeutet, die Wellentäler sind dort vollständig mit Stegmasse gefüllt. Die Stegbreite beträgt etwa 1 mm.

Zwecks zusätzlicher seitlicher Stabilisierung des Verteilerrohres 1 sind um den Umfang um 90 Grad versetzt weitere Stabilisierungsstege 15 vorgesehen, die mit Unterbrechungen im Bereich der Rohranschlussstutzen 2 entlang der Rohr-Längsachse 10 verlaufen. Diese Stabilisierungsstege 15 sind hohl ausgebildet, wie auch sonst im Stand der Technik üblich. Sie werden bei der Herstellung des Verteilerrohres 1 durch Ausstülpen des Wellentals geformt.

Der Rohranschluss 2 besteht aus einem Sockel 4, der in einem im Querschnitt L-förmigen Profil in zwei Rohranschlussstutzen 8; 9 verzweigt. Der kürzere Schenkel des Profils ist integral mit der Wandung 7 des Verteilerrohres 1 verbunden und der längere Schenkel des L-Profils trägt die beiden Rohranschlussstutzen 8, 9 für die Verbindung mit einem Kollektorrohr (in der Figur 1 nicht dargestellt).

Der Querschnitt des kurzen Sockel-Schenkels 5 ist im Wesentlichen rechteckig mit abgerundeten Kanten. Die Rechteckform und die vergleichsweise großen Sockelabmessungen gewährleisten eine hohe mechanische Stabilität des Rohranschlusses 1 und ermöglichen eine Formänderung bei Anliegen eines Innendrucks. Der Querschnitt des längeren Sockelschenkels 6 zeigt Dreiecksform mit abgerundeten Ecken. Auch hierdurch ergibt sich eine bessere Formänderungsvermögen bei Innendruck und damit eine höhere Frostbeständigkeit.

Infolge der Verzweigung des Sockels 4 in jeweils zwei Rohranschlussstutzen 8; 9 ist der Mittenabstand der Sockel 4 doppelt so groß ist wie der Mittenabstand der Rohranschlussstutzen 8; 9 beziehungsweise der Kollektorrohre. Der größere Abstand zwischen benachbarten Sockeln 4 erleichtert den stirnseitigen Anschluss anderer Bauteile und bietet außerdem eine größere Auflagefläche für Halterungen für den Absorber.

**Figur 2** zeigt einen radialen Schnitt durch das Verteilerrohr 1 mittig durch den Sockel 4 des Rohranschlusses 2. Die Verteilerrohr-Längsachse 10 (siehe Figur 1) verläuft hier senkrecht zur Blattebene. Die lichte Weite des Verteilerrohres 1 beträgt 40 mm, der Außendurchmesser 50 mm und die Wandstärke liegt bei etwa 1 mm. Die Verteilerrohr-Wandung 7 ist innen wie außen mit einem Wellprofil versehen. In das Verteilerrohr 1 münden im gleichen Abstand voneinander Rohranschlüsse 2, die jeweils einen Sockel 4 aufweisen, der in zwei Rohranschlussstutzen 8 (der Rohranschlussstutzen 9 ist verdeckt) verzweigt. Der nächste Wellenberg 5 des Wellprofils ist erkennbar. Die seitlichen Stabilisierungsstege 15 sind hierbei aus Gründen einer besseren Übersicht nicht dargestellt.

**Figur 3** zeigt einen radialen Schnitt durch ein Wellental des Verteilerrohres 1 in einer Draufsicht auf den nächsten Wellenberg 5 auf der Außenseite des Wellprofils. Der an der Außenwandung im Wellental an der Oberseite verlaufende Steg trägt die Bezugsziffer 11, der an der Unterseite verlaufende Steg die Bezugsziffer 12. Die Stege 11; 12, die sich durch die Wellentäler an der Außenwandung erstrecken, haben eine Breite von 1 mm, eine Höhe, die etwa der des Wellentals entspricht und in dieser Darstellung einen im Wesentlichen rechteckigen Querschnitt.

**Figur 4** zeigt einen radialen Schnitt durch einen Wellenberg des Verteilerrohres 1 in einer Draufsicht auf das nächste Wellental 6 auf der Außenseite des Wellprofils. Der an der Innenwandung im Wellental an der Oberseite verlaufende Steg trägt hier die Bezugsziffer 13, der an der Innenwandung im Bereich der Unterseite verlaufende Steg die Bezugsziffer 14. Die Stege 13; 14, die sich durch die Wellentäler an der Innenwandung erstrecken füllen das Wellental über seine Breite gesehen vollständig aus, aber nicht über seine gesamte Tiefe gesehen. Sie haben eine Breite von deutlich mehr als 1 mm, eine Höhe, die geringer ist als die Tiefe des Wellentals und in dieser Darstellung einen im Wesentlichen halbrunden Querschnitt mit konvexer Außenwölbung. Die Halbrund-form der Innenstege 13; 14 behindert die Strömung der Flüssigkeit an der Innenwandung wenig und sie vermeidet tote Ecken und Winkel, die zu Ablagerungen führen können und die das Leeren und Spülen des Wellrohre erschweren.

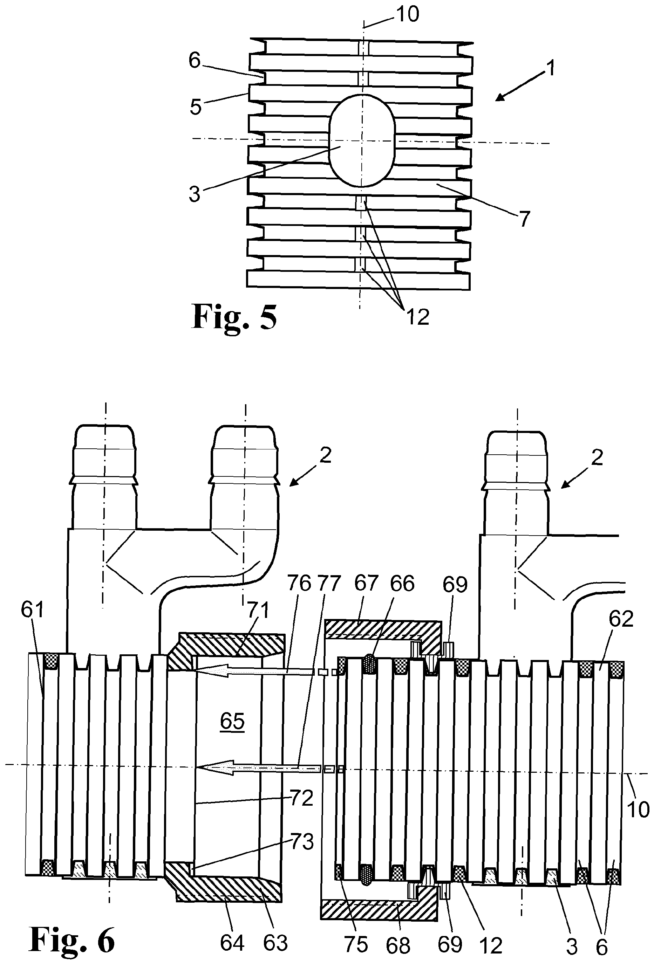

Die jedem Rohranschluss 2 jeweils genau gegenüberliegende Sicke 3 ist in **Figur 5** schematisch in einer Draufsicht gezeigt. Die Sicke 3 trägt zur Spannungskompensation und zur Versteifung des Verteilerrohres 1 bei. Sie ist als ovale Erhöhung mit etwa den radialen Außenabmessungen des Sockels 4 des Rohranschlusses 2 ausgeführt. Aus Figur 3 ist auch das Wellprofil der Verteilerrohr-Wandung 7 gut zu erkennen. Mit der Bezugsziffer 6 ist ein "Wellental" des Wellprofils, und mit der Bezugsziffer 5 ist ein "Wellenberg" bezeichnet. Der Mittenabstand der Wellenberge liegt bei 7,5 mm. Die Wellentäler 6 sind in einer Breite von etwa 1 mm vollständig mit Stegen 12 ausgefüllt. Diese verlaufen axial hintereinander entlang der Längsachse 10 und verbinden benachbarte Wellenberge miteinander.

**Figur 6** zeigt schematisch die Verlängerung des Verteilerrohres 61 mit einem weiteren Verteilerrohr 62. Zu diesem Zweck ist an das eine Ende des Verteilerrohres 61 eine hülsenförmige Muffe 63 angespritzt. Die Innenbohrung 65 der Muffe 63 verjüngt sich vom vorderen Ende aus und geht danach in einen Längenabschnitt 71 mit konstantem Innendurchmesser über. Der Innendurchmesser in diesem Bereich ist geringfügig größer als der Außendurchmesser des Verteilerrohres 61. Der Längenabschnitt 71 weist eine polierte Innenwandung auf und er endet an einem umlaufenden Absatz 72 mit etwas geringerem Innendurchmesser. Der Absatz 72 bildet eine Auflagefläche mit einer in Richtung der Verteilerrohr-Längsachse 10 weisenden Flächennormalen. Die Auflagefläche 72 weist zwei sich gegenüberliegende Aussparungen 73 mit einer Breite von etwa 2 mm auf. Der Außenmantel der Muffe 63 ist mit einem Außengewinde 64 versehen.

Das Verteilerrohr-Verlängerungsstück 62 wird auf die gewünschte Länge geschnitten. Vorzugsweise verläuft der Schnitt durch ein Wellental 6 (und nicht durch einen Wellenberg), so dass ein Teil 75 des Steges im Wellental 6 erhalten bleibt. Das dem Schnitt benachbarte Wellental 6 wird geöffnet, indem der dortige Steg 12 entfernt wird. In das geöffnete Wellental 6 wird ein Dichtring 66 eingelegt. Der Dichtring 66 hat einen Außendurchmesser der geringfügig größer ist als der Außendurchmesser des Verteilerrohr-Verlängerungsstücks 62.

Zur Herstellung einer Gewindeverbindung mit der Muffe 63 ist eine Überwurfmutter 67 vorgesehen. Diese besteht aus zwei gelenkig zusammengefügten Halbringen, die um das Verteilerrohr-Verlängerungsstück 62 gelegt und geschlossen werden. Die Überwurfmutter 67 weist ein Innengewinde auf, das mit dem Außengewinde 64 der Muffe 63 korrespondiert.

Die Überwurfmutter 67 ist auf einem Mutterträger 69 drehbar gelagert. Dieser wird in ein Wellental 6 hinter dem Dichtring 66 eingelegt und besteht ebenfalls aus zwei Halbringen, die gelenkig miteinander verbunden sind. Im Bereich der beiden Stege 12, die das betreffende Wellental 6 queren, weist der Mutterträger 69 im geschlossenen Zustand zwei Ausnehmungen in Größe der Stege 12 auf. Die Stege 12 müssen daher zum Einlegen des Mutterträgers 69 nicht entfernt werden, so dass eine Unterbrechung des Kraftlinienflusses vermieden wird und die Stege 12 außerdem als Orientierungshilfe beim Einlegen des Mutterträgers 69 in das Wellental dienen.

Der Mutterträger 69 weist an seiner Innenseite ein Profil auf, das in das Wellental hineinpasst; seine nach außen weisende Seite ist als umlaufende Nut mit U-Profil ausgeführt. In die U-Nut ragt ein umlaufender Innenkragen der Überwurfmutter 67, über den sie innerhalb der U-Nut um die Rohr-Längsachse 10 leichtgängig drehbar ist.

Durch Aufdrehen der Überwurfmutter 67 auf das Außengewinde der Muffe 63 werden Verteilerrohr-Verlängerungsstück 62 und Verteilerrohr 61 gegeneinander gezogen. Dabei gelangt der Dichtring 66 über die konisch zulaufende Öffnung der Muffe 63 in den Muffen-Längenabschnitt 71 mit konstantem Innendurchmesser, wird dabei in radialer Richtung zusammengepresst und stellt so die gewünschte Abdichtung zwischen den Rohrstücken 61, 62 her, ohne dass es zu einer merklichen Längung des Verteilerrohr-Verlängerungsstücks 62 kommt. Die Abdichtung erfolgt im Wesentlichen über die Anlage der polierten Innenwandung der Muffe 63 am äußeren Umfang des Dichtrings 66 und ergänzend dazu über die Anlage an den Flanken und am Boden des Wellentals.

Beim weiteren Aufdrehen der Überwurfmutter 67 gelangen die Stegreste 75 des stirnseitigen Wellentals des Verteilerrohr-Verlängerungsstück 62 in Eingriff mit den beiden sich gegenüberliegenden Aussparungen 73 des umlaufenden Absatzes 72 der Muffe, wie vom Blockpfeil 76 angedeutet. Dadurch wird sichergestellt, dass die Anschlussstutzen 2 der beiden Rohrstücke 61; 62 fluchten. Zuletzt liegt die stirnseitige Schnittfläche des Verteilerrohr-Verlängerungs-stücks 62 auf der Auflagefläche 72 der Muffe 63 an, wie vom Blockpfeil 77 angedeutet.

## Patentansprüche

1. Verteilerrohr (1) aus Kunststoff-Wellrohr als Flüssigkeitsleitung für einen Solarkollektor, mit einer von Rohr-Innenseite und Rohr-Außenseite begrenzten Rohr-Wandung (7) mit Wellprofil und rundem Querschnitt, bei dem sich entlang einer Rohr-Längsachse (10) umfänglich verlaufende Wellenberge (5) und Wellentäler (6) abwechseln, wobei entlang einer ersten Längsseite der Rohr-Wandung (7) und jeweils als integraler Bestandteil derselben eine Vielzahl von Rohranschlussstutzen (2) und diesen gegenüberliegend auf einer zweiten Längsseite eine Vielzahl von Sicken (3) zur Formstabilisierung verteilt sind, **dadurch gekennzeichnet, dass** sich entlang der ersten Längsseite und entlang der zweiten Längsseite jeweils ein Längssteg (11; 12; 13; 14) erstreckt, über den benachbarte Wellenberge (5) so miteinander verbunden sind, dass sowohl an der Rohr-Außenseite als auch an der Rohr-Innenseite die Wellentäler (6) mindestens teilweise mit Stegmasse aufgefüllt sind, wobei der eine Längssteg (11; 13) durchgängig zwischen den Rohranschlussstutzen (2) ausgebildet und durch die Rohranschlussstutzen (2) unterbrochen ist, und der andere Längssteg (12; 14) durchgängig zwischen den Sicken (3) ausgebildet und durch die Sicken (3) unterbrochen ist.

2. Verteilerrohr nach Anspruch 1, **dadurch gekennzeichnet, dass** mindestens an der Rohr-Außenseite die Wellentäler (6) vollständig mit Stegmasse aufgefüllt sind.

3. Verteilerrohr nach Anspruch 1 oder 2, **dadurch gekennzeichnet, dass** der Längssteg (11; 12; 13; 14) massiv und zwischen den Rohranschlussstutzen (2) beziehungsweise zwischen den Sicken (3) durchgängig ausgebildet ist.

4. Verteilerrohr nach einem der vorhergehenden Ansprüche, **dadurch gekennzeichnet, dass** der Längssteg (11; 12) an der Rohr-Außenseite durch ebene, gerade, seitliche Flanken und durch eine ebene Längssteg-Oberseite begrenzt ist.

5. Verteilerrohr nach Anspruch 4, **dadurch gekennzeichnet, dass** die Flanken parallel zueinander verlaufen.

6. Verteilerrohr nach einem der Ansprüche 4 oder 5, **dadurch gekennzeichnet, dass** die Wellenberge (5) von im Wesentlichen parallel zueinander verlaufenden seitlichen Flanken und von einer ebenen Oberseite begrenzt sind, und dass die Oberseite der Wellenberge (5) bündig mit der Längssteg-Oberseite abschließt.

7. Verteilerrohr nach einem der Ansprüche 4 bis 6, **dadurch gekennzeichnet, dass** der Längssteg (11; 12) im Bereich der Verteilerrohr-Außenseite eine Stegbreite von weniger als 2 mm aufweist.

8. Verteilerrohr nach einem der vorhergehenden Ansprüche, **dadurch gekennzeichnet, dass** die Stegmasse (14) zur Auffüllung der Wellentäler (6) an der Rohr-Innenseite einen im Wesentlichen halbrunden Querschnitt aufweist.

9. Verteilerrohrsystem, umfassend ein erstes und ein zweites Verteilerrohr nach einem der Ansprüche 1 bis 8 sowie einen Dichtring (66) zur Herstellung einer dichten Verbindung zwischen dem ersten und dem zweiten Verteilerrohr, **dadurch gekennzeichnet, dass** das erste Verteilerrohr ein stirnseitiges Ende aufweist, das mit einer Muffe (63) versehen ist, die eine Bohrung (65) aufweist, die sich in Richtung der Rohr-Längsachse (10) von außen nach innen verjüngt und die in einem hinteren Längenabschnitt einen, bevorzugt konstanten, Innendurchmesser aufweist, der kleiner ist als ein vorgegebener Durchmesser des in ein Wellental des Wellprofils eingelegten Dichtrings (66).

10. Verteilerrohrsystem nach Anspruch 9, **dadurch gekennzeichnet, dass** die Muffe mit dem stirnseitigen Ende dicht verklebt, verschweißt oder angepritzt ist.

11. Verteilerrohrsystem nach einem der Ansprüche 9 oder 10, **dadurch gekennzeichnet, dass** die Muffe (63) ein Außengewinde (64) aufweist und dass zur Herstellung einer dichten Verbindung das der Muffe (63) zugewandte stirnseitige Ende des zweiten Verteilerrohres (62), bei dem der Dichtring (66) in ein geöffnetes Wellental des Wellprofils eingelegt ist, mit einer zweiteiligen Überwurfmutter (67) versehen ist, die ein Innengewinde (68) aufweist, das mit dem Außengewinde (64) der Muffe (63) korrespondiert.

12. Verteilerrohrsystem nach Anspruch 11, **dadurch gekennzeichnet, dass** die Überwurfmutter (67) an ihrem hinteren, dem zweiten Verteilerrohr (62) zugewandten Ende einen nach innen ragenden umlaufenden Kragen aufweist, der drehbar in einer Innennut eines Mutterträgers (69) gelagert ist, wobei der Mutterträger (69) als zweiteiliger Ring ausgeführt ist, der mit seiner Innenseite in einem Wellental (6) des Wellprofils einliegt.

13. Verteilerrohrsystem nach Anspruch 11 und 12, **dadurch gekennzeichnet, dass** die beiden Teile von Überwurfmutter (67) und Mutterträger (69) jeweils gelenkig miteinander verbunden sind.

14. Verteilerrohrsystem nach einem der Ansprüche 9 bis 13, **dadurch gekennzeichnet, dass** die Muffe (63) in einem hinteren Bereich einen umlaufenden Absatz mit einer in Richtung der Verteilerrohr-Längsachse (10) weisenden Auflagefläche (72) aufweist.

15. Verteilerrohrsystem nach Anspruch 14 **dadurch gekennzeichnet, dass** die in Richtung der Verteilerrohr-Längsachse (10) weisende Auflagefläche (72) an zwei sich radial gegenüberliegenden Bereichen jeweils eine Aussparung (73) hat.

## Claims

1. Distribution tube (1) made of plastic corrugated tube as a fluid flow line for a solar collector, comprising a tube wall (7) defined by tube inside and tube outside and having a corrugated profile and round cross-section, in which corrugation peaks (5) and corrugation valleys (6) which circumferentially extend along a tube longitudinal axis (10) are alternating, wherein along a first longitudinal side of the tube wall (7) and each time as an integral part thereof a plurality of tube connection nozzles (2) and, opposite thereto at a second longitudinal side, a plurality of beads (3) are distributed for dimensional stabilization, **characterized in that** along the first longitudinal side and along the second longitudinal side a respective longitudinal web (11; 12; 13; 14) extends, via which neighboring corrugation peaks (5) are interconnected such that both on the tube outside and on the tube inside the corrugation valleys (6) are filled at least in part with web mass, wherein the one longitudinal web (11; 13) is continuously formed between the tube connection nozzles (2) and interrupted by the tube connection nozzles (2), and the other longitudinal web (12; 14) is continuously formed between the beads (3) and is interrupted by the beads (3).

2. Distribution tube according to claim 1, **characterized in that** at least on the tube outside the corrugation valleys (6) are completely filled with web mass.

3. Distribution tube according to claim 1 or 2, **characterized in that** the longitudinal web (11; 12; 13; 14) is made massive and continuous between the tube connection nozzles (2) and between the beads (3), respectively.

4. Distribution tube according to any one of the preceding claims, **characterized in that** the longitudinal web (11; 12) is defined on the tube outside by planar, straight, lateral flanks and by a planar longitudinal-web top side.

5. Distribution tube according to claim 4, **characterized in that** the flanks extend in parallel with each other.

6. Distribution tube according to any one of claims 4 or 5, **characterized in that** the corrugation peaks (5) are defined by lateral flanks extending substantially in parallel with one another and by a planar top side, and that the top side of the corrugation peaks (5) ends flush with the longitudinal-web top side.

7. Distribution tube according to any one of claims 4 to 6, **characterized in that** the longitudinal web (11; 12) in the area of the outside of the distribution tube has a web width of less than 2 mm.

8. Distribution tube according to any one of the preceding claims, **characterized in that** the web mass (14) has a substantially half-round cross-section for filling the corrugation valleys (6) on the tube inside.

9. Distribution tube system comprising a first and a second distribution tube according to any one of claims 1 to 8 and a sealing ring (66) for establishing a tight connection between the first and the second distribution tube, **characterized in that** the first distribution tube has a face end which is provided with a sleeve (63) which has a bore (65) which is tapering in the direction of the longitudinal axis (10) of the tube from the outside to the inside and which in a rear longitudinal section has a preferably constant inner diameter which is smaller than a predetermined diameter of the sealing ring (66) inserted into a corrugation valley of the corrugated profile.

10. Distribution tube system according to claim 9, **characterized in that** the sleeve is tightly glued, welded or injection molded to the face end.

11. Distribution tube system according to any one of claims 9 or 10, **characterized in that** the sleeve (53) has an external thread (64) and that for the establishment of a tight connection the face end of the second distribution tube (62) which faces the sleeve (63) and in which the sealing ring (66) is inserted in an opened corrugation valley of the corrugated profile is provided with a two-part union nut (67) which has an internal thread (68) which corresponds to the external thread (64) of the sleeve (63).

12. Distribution tube system according to claim 11, **characterized in that** the union nut (67) on its rear end facing the second distribution tube (62) has an inwardly projecting surrounding collar which is rotatably supported in an inner groove of a nut carrier (69), wherein the nut carrier (69) is designed as a two-part ring which is inserted with its inside in a corrugation valley (6) of the corrugated profile.

13. Distribution tube system according to claim 11 and 12, **characterized in that** the two parts of union nut (67) and nut carrier (69) are hingedly connected to each other.

14. Distribution tube system according to any one of claims 9 to 13, **characterized in that** the sleeve (63) in a rear portion has a surrounding step with a support surface (72) oriented in the direction of the longitudinal axis (10) of the distribution tube.

15. Distribution tube system according to claim 14, **characterized in that** the support surface (72) which is oriented in the direction of the longitudinal axis (10) of the distribution tube has a respective recess (73) on two radially opposite portions.

## Revendications

1. Tuyau de distribution (1) composé d'un tuyau ondulé en plastique servant de conduite de fluide pour un capteur solaire, présentant une paroi de tuyau (7) délimitée par un côté interne du tuyau et par un côté externe du tuyau, avec un profil ondulé et une section transversale circulaire, où s'alternent, le long d'un axe longitudinal de tuyau (10), des sommet d'ondulations (5) et des creux (6) s'étirant sur toute la circonférence, une pluralité de raccords tubulaires (2) étant répartie le long d'un premier côté longitudinal de la paroi de tuyau (7) et considérée, à chaque fois, comme un composant à part entière de celle-ci et une pluralité de moulure (3) étant répartie à l'opposé de ces raccords sur un deuxième côté longitudinal, à des fins de stabilisation de la forme, **caractérisé en ce que** le long du premier côté longitudinal et le long du deuxième côté longitudinal s'étend, à chaque fois, une barre longitudinale (11 ; 12 ; 13 ; 14), grâce à laquelle les sommets d'ondulation (5) adjacents sont reliés les uns aux autres de façon à remplir avec la masse de la barre au moins partiellement les creux d'ondulation (6) aussi bien au niveau du côté externe du tuyau que du côté interne, la une barre longitudinale (11 ; 13) étant formée en continue entre les raccords de tuyau (2) et étant interrompue par les raccords de tuyau (2) et l'autre barre longitudinale (12 ; 14) étant formée en continu entre les moulures (3) et interrompue par les moulures (3).

2. Tuyau de distribution selon la revendication 1, **caractérisé en ce qu'**au moins au niveau du côté externe du tuyau, les creux d'ondulation (6) sont complètement remplis par la masse de la barre.

3. Tuyau de distribution selon la revendication 1 ou 2, **caractérisé en ce que** la barre longitudinale (11 ; 12 ; 13 ; 14) est formée de manière massive et en continue entre les raccords de tuyau (2) ou entre les moulures (3).

4. Tuyau de distribution selon l'une quelconque des revendications précédentes, **caractérisé en ce que** la barre longitudinale (11 ; 12) est délimitée au niveau du côté externe du tuyau par des flancs plans, rectilignes et latéraux et par un coté supérieure plane de la barre longitudinale.

5. Tuyau de distribution selon la revendication 4, **caractérisé en ce que** les flancs s'étendent parallèlement les uns aux autres.

6. Tuyau de distribution selon l'une quelconque des revendications 4 ou 5, **caractérisé en ce que** les sommets d'ondulation (5) sont délimités par des flancs latéraux s'étendant de manière sensiblement parallèle les uns par rapport aux autres et une partie supérieure plane et **en ce que** la partie supérieure des sommets d'ondulation (5) vient à fleur de la partie supérieure de la barre longitudinale.

7. Tuyau de distribution selon l'une quelconque des revendications 4 à 6, **caractérisé en ce que** la barre longitudinale (11 ; 12) présente dans le domaine du côté externe du tuyau de distribution, une largeur de barre inférieure à 2 mm.

8. Tuyau de distribution selon l'une quelconque des revendications précédentes, **caractérisé en ce que** la masse de la barre (14) présente, pour le remplissage des creux d'ondulation (6) au niveau du côté interne du tuyau une section transversale sensiblement semi-circulaire.

9. Système de tuyaux de distribution comprenant un premier et un deuxième tuyaux de distribution selon l'une quelconque des revendications 1 à 8 ainsi qu'une bague d'étanchéité (66) destinée à réaliser un raccordement étanche entre le premier et le deuxième tuyau de distribution, **caractérisé en ce que** le premier tuyau de distribution présente une extrémité frontale, pourvue d'une manchon (63) présentant un alésage (65) qui s'effile, dans la direction de l'axe longitudinal (10) du tuyau, de l'extérieur vers l'intérieur et qui présente dans une section longitudinale arrière, un diamètre intérieur de préférence constant qui est inférieur au diamètre prédéterminé de la bague d'étanchéité (66) insérée dans un creux d'ondulation du profil ondulé.

10. Système de tuyaux de distribution selon la revendication 9, **caractérisé en ce que** le manchon est collé, soudé ou moulé par injection à l'extrémité frontale de manière étanche.

11. Système de tuyaux de distribution selon l'une quelconque des revendications 9 ou 10, **caractérisé en ce que** le manchon (63) présente un filetage externe (64) et **en ce que** l'extrémité frontale du deuxième tuyau de distribution (62) orientée vers le manchon (63) afin de réaliser un raccordement étanche - pour lequel tuyau la bague d'étanchéité (66) est insérée dans un creux d'ondulation ouvert du profil ondulé - est pourvu d'un écrou (67) pivotant en deux parties qui présente un filetage interne (68) correspondant au filetage externe (64) du manchon (63).

12. Système de tuyaux de distribution selon la revendication 11, **caractérisé en ce que** l'écrou pivotant (67) présente au niveau de son extrémité arrière, orientée vers le deuxième tuyau de distribution (62) une collerette périphérique saillant vers l'intérieur, qui est montée de manière rotative dans une rainure intérieure d'un porteur d'écrou (69), le porteur d'écrou (69) étant conçu comme un anneau en deux parties, qui se loge grâce à son côté interne dans un creux d'ondulation (6) du profil ondulé.

13. Système de tuyaux de distribution selon la revendication 11 et 12, **caractérisé en ce que** les deux parties de l'écrou pivotant (67) et du porteur d'écrou (69) sont chacune reliées de manière articulée l'une à l'autre.

14. Système de tuyaux de distribution selon l'une quelconque des revendications 9 à 13, **caractérisé en ce que** le manchon (63) présente dans une zone arrière, une section périphérique avec une surface de contact (72) orientée dans la direction de l'axe longitudinal (10) du tuyau de distribution.

15. Système de tuyaux de distribution selon la revendication 14, **caractérisé en ce que** la surface de contact (72) orientée dans la direction de l'axe longitudinal (10) du tuyau de distribution présente à chaque fois un évidement (73) au niveau des deux zones radialement opposées.
